Europäisches Patentamt

European Patent Office

Office européen des brevets

(19)

(11) Numéro de publication: **0 180 509**

**B1**

(12) **FASCICULE DE BREVET EUROPEEN**

(45) Date de publication du fascicule du brevet: **19.12.90**

(51) Int. Cl.⁵: **G 02 F 1/35**

(21) Numéro de dépôt: **85402016.1**

(22) Date de dépôt: **18.10.85**

(54) Procédé et dispositif de modulation de phase optique contrôlable stable.

(30) Priorité: **19.10.84 FR 8416086**

(43) Date de publication de la demande:
**07.05.86 Bulletin 86/19**

(45) Mention de la délivrance du brevet:
**19.12.90 Bulletin 90/51**

(84) Etats contractants désignés:
**AT BE CH DE FR GB IT LI LU NL SE**

(56) Documents cités:
**OPTICAL AND QUANTUM ELECTRONICS, vol. 13, no. 5, septembre 1981, Chapman and Hall Ltd., pages 393-400, GB; M. VAMPOUILLE et al.: "Modulation de phase controlée dans les fibres optiques monomodales"**

**OPTICAL AND QUANTUM ELECTRONICS, vol. 14, no. 3, mai 1982, Chapman and Hall Ltd., pages 253-262, GB; M. VAMPOUILLE et al.: "Application du contrôle de l'autofocalisation dans CS2 au raccourcissement d'impulsions laser picoseconde"**

(73) Titulaire: **CENTRE NATIONAL DE LA RECHERCHE SCIENTIFIQUE (CNRS)**
**15, Quai Anatole France**
**F-75007 Paris (FR)**

(72) Inventeur: **Barthelemy, Alain**
**22 Allée Olivier de Serres**
**F-87100 Limoges (FR)**
Inventeur: **Colombeau, Bernard**
**7 Impasse Ruchoux**
**F-87100 Limoges (FR)**
Inventeur: **Froehly, Claude**
**25 rue des Sablons**
**F-87100 Limoges (FR)**
Inventeur: **Vampouille, Michel**
**18 rue Pierre Ragot**
**F-87100 Limoges (FR)**

(74) Mandataire: **Thévenet, Jean-Bruno et al**
**Cabinet BEAU DE LOMENIE 55 rue d'Amsterdam**
**F-75008 Paris (FR)**

Courier Press, Leamington Spa, England.

(56) Documents cités:

OPTICS COMMUNICATIONS, vol. 55, no. 3, 1 septembre 1985, Elsevier Science Publishers B.V., pages 201-206, Amsterdam, NL; A. BARTHELEMY et al.: "Propagation soliton et auto-confinement de faisceaux laser par non linearité optique de kerr"

APPLIED PHYSICS LETTERS, vol. 25, no. 8, 15 octobre 1974, American Institute of Physics, pages 448450, New York, US; E.S. BLISS et al.: "Porpagation of a high-intensity laser pulse with small-scale intensity modulation"

SOVIET JOURNAL OF QUANTUM ELECTRONICS, vol. 10, no. 6, juin 1980, American Institute of Physics, pages 757-758, New York, US; B.Ya. ZEL'DOVICH et al.: "Distortions of a fine-structure wave pattern due to self-focusing nonlinearity"

# Description

La présente invention concerne un procédé et un dispositif de modulation de phase optique contrôlable stable dans des faisceaux de structure géométrique régulière, et vise notamment à produire des ondes modulées en phase avec des déphasages optiques supérieurs à 2π radians, et à effectuer des amplifications de rayonnement laser avec des gains élevés.

On a déjà réalisé des modulations de phase optiques à partir d'ondes planes de type gaussien, c'est-à-dire présentant une intensité de champ plus intense au centre que sur les bords, en utilisant l'effet Kerr optique qui est la propriété pour certains matériaux de présenter des variations auto-induites d'indice de réfraction lorsqu'ils sont parcourus par une onde à puissance variable. De tels matériaux à propagation non linéaire permettent ainsi de créer des déphasages de l'onde plane lorsque celle-ci pénètre dans le matériau non linéaire. Toutefois, lorsque lapuissance de l'onde plane est trop faible, le déphasage reste inférieur à 2π radians et reste trop faible pour permettre des applications intéressantes. Au contraire, lorsque la puissance de l'onde plane est élevée, il se produit au sein du matériau non linéaire une autofocalisation qui correspond à un phénomène de modulation de phase instable et non contrôlable et provoque une explosion de l'onde au sein de la matière.

Il se pose ainsi le problème de pouvoir créer dans un faisceau lumineux une modulation de phase stable et contrôlable qui soit suffisamment importante sans provoquer d'explosion du faisceau lumineux en sortie d'un matériau non linéaire.

On a déjà proposé, notamment dans l'article de M. Vampouille et J. Marty intitulé "modulation de phase contrôlée dans les fibres optiques monomodales", paru dans la revue "Optical and Quantum Electronics N. 13 de 1981 pp. 393-400, de réaliser une modulation de phase contrôlée à partir d'impulsions non gaussiennes, profilées à volonté suivant des lois temporelles appropriées, et transmises à travers des fibres optiques monomodales non dispersives.

L'utilisation de fibres optiques monomodales pour créer une modulation de phase contrôlée représente cependant une contrainte importante qui limite fortement les applications. En effet, les fibres monomodes présentent un coeur de petit diamètre et ne peuvent transporter sans dommage qu'une très faible puissance. Pour certains domaines de longueur d'onde, il n'est plus possible, en pratique, de travailler qu'avec des fibres réalisées en silice, c'est-à-dire en un matériau monomode peu non linéaire qui ne permet pas d'obtenir des performances réellement intéressantes.

Le phénomène d'autofocalisation d'un faisceau laser composé d'impulsions d'une durée initiale de l'ordre de 30ps, lorsque le faisceau laser pénètre dans un matériau présentant l'effet Kerr optique, a été analysé dans l'article de M. Vampouille, B. Colombeau et C. Froehly, intitulé "Application du contrôle de l'autofocalisation dans CS$_2$ au raccourcissement d'impulsions laser picoseconde, paru dans la revue "Optical and Quantum Electronics N.14 de 1982, PP.253-261. Si l'article précité indique certaines conditions expérimentales de maîtrise spatiale du phénomène d'autofocalisation dans des matériaux optiques non linéaires et présente les caractéristiques des effets de modulation obtenus, il ne présente aucun moyen visant à éviter l'autofocalisation des ondes planes incidentes qui sont toujours de type gaussien. Les applications des dispositifs décrits dans cet article sont donc limitées et notamment ne permettent pas de créer un faisceau stable évoluant de façon parfaitement maîtrisée avec des déphasages non linéaires supérieurs à 2π radians.

L'invention a donc précisément pour objet de créer une modulation de phase stable et bien contrôlée dans un faisceau de structure géométrique régulière permettant d'obtenir des déphasages supérieurs à 2π radians.

L'invention a encore pour objet de permettre la réalisation d'une amplification, à gains élevés, de faisceaux conservant une structure géométrique régulière, sans problème critique d'auto-focalisation.

Ces buts sont atteints grâce à un procédé de modulation de phase optique dans un faisceau lumineux pulsé cohérent de structure géométrique régulière dans lequel ledit faisceau traverse un matériau à variation auto-induite d'indice de réfraction, caractérisé en ce que ledit faisceau est fragmenté de manière à former une structure bidimensionnelle divisée en cellules régulières lors de sa propagation dans ledit matériau.

On produit le faisceau fragmenté à partir d'un faisceau laser auquel on a fait traverser un dispositif interférentiel ou de modulation spatiale périodique.

On utilise un faisceau laser délivré par une source laser à modes bloqués afin d'obtenir des déphasages dépendant de l'espace et du temps suivant une loi prédéterminée.

Selon une caractéristique avantageuse, on réalise dans le dispositif interférentiel par bi-réfringence une division d'amplitude du faisceau laser pour former quatre ondes dont la valeur moyenne du produit de corrélation est nulle.

Selon un mode particulier de réalisation, on produit une fragmentation du faisceau de structure géométrique régulière à l'aide d'un système à dispersion croisée produisant une image à travers un système afocal.

Selon une variante de réalisation, on produit une fragmentation du faisceau de structure géométrique régulière par filtrage des fréquences spatiales au moyen d'une double diffraction.

L'invention concerne également un dispositif de modulation de phase optique contrôlable stable comprenant une source d'impulsions laser brèves et un matériau à variation auto-induite d'indice de réfraction, lequel dispositif, conformément à l'invention, comprend un dispositif d'interférométrie ou de masquage qui est interposé entre la source d'impulsions laser brèves et le matériau à variation auto-induite d'indice de réfraction pour former quatre ondes fragmentées dont la valeur moyenne du produit de corrélation est nulle.

Selon un premier mode de réalisation, le dispositif d'interférométrie comprend un premier prisme de Wollaston à grand angle de déviation interposé sur le trajet du faisceau laser principal émis par la source laser, pour réaliser un premier dédoublement du faisceau laser principal en deux faisceaux secondaires divergents situés dans un premier plan $P_1$, une lame demi-onde disposée sur le trajet de l'un des deux faisceaux secondaires, des premier et second miroirs disposés sur les trajets des deux faisceaux secondaires, perpendiculairement audit premier plan $P_1$ pour rendre convergents les deux faisceaux secondaires divergents, un second prisme de Wollaston à grand angle de déviation placé au point de convergence des deux faisceaux secondaires pour réaliser un dédoublement de chacun des deux faisceaux secondaires dans des plans perpendiculaires audit premier plan $P_1$ de manière à créer un ensemble de quatre faisceaux tertiaires divergents, une seconde lame demi-onde disposée sur le trajet de deux des quatre faisceaux tertiaires divergents et des troisième, quatrième, cinquième et sixième miroirs placés sur les trajets des quatre faisceaux tertiaires divergents et inclinés par rapport aux premier et second miroirs de manière à faire converger les quatre faisceaux tertiaires dans le matériau à variation auto-induite d'indice de réfraction.

Selon un autre mode de réalisation, le dispositif d'interférométrie comprend un premier prisme de Wollaston à petit angle de déviation interposé sur le trajet du faisceau laser principal émis par la source laser, pour réaliser un premier dédoublement du faisceau laser principal en deux faisceaux secondaires faiblement divergents situés dans un premier plan $P_1$, une lame demi-onde disposée sur le trajet de l'un des deux faisceaux secondaires, un second prisme de Wollaston à petit angle de déviation placé sur le trajet des deux faisceaux secondaires pour réaliser un dédoublement de chacun des deux faisceaux secondaires dans des plans perpendiculaires audit premier plan $P_1$ de manière à créer un ensemble de quatre faisceaux tertiaires faiblement divergents, une seconde lame demi-onde disposée sur le trajet de deux des quatre faisceaux tertiaires et un système optique afocal placé sur les trajets des quatre faisceaux tertiaires faiblement divergents pour faire converger les quatre faisceaux tertiaires dans le matériau à variation auto-induite d'indice de réfraction.

Selon encore un autre mode de réalisation, le dispositif de modulation de phase comprend un dispositif de masquage à quatre faisceaux constitué successivement par un masque binaire comprenant un réseau d'ouvertures réparties en damier, une première lentille convergente, un filtre spatial muni d'un ensemble de quatre ouvertures réparties en croix, et une seconde lentille convergente pour former un réseau de franges dans le matériau à variation auto-induite d-indice de réfraction.

Dans ce cas, le masque binaire et le filtre sont situés dans les plans focaux de la première lentille convergente, tandis que le filtre et le matériau à variation auto-induite d'indice de réfraction sont situés dans les plans focaux de la seconde lentille convergente.

Selon encore un autre mode de réalisation, le dispositif de modulation de phase comprend un dispositif de masquage à quatre faisceaux constitué par un réseau de diffraction à deux dimensions par réflexion ou transparence et un système optique afocal pour former un réseau de franges dans le matériau à variation auto-induite d'indice de réfraction.

Dans une application particulière du procédé selon l'invention, le matériau à variation auto-induite d'indice de réfraction est constitué par un matériau amplificateur, de sorte que des gains élevés dans des faisceaux de structure géométrique régulière sont obtenus.

Selon une caractéristique avantageuse, le faisceau fragmenté réalise la distribution transversale d'intensité d'un mode propre de propagation du guide optique constitué par le milieu amplificateur.

Le matériau amplificateur peut être un cristal YAG; Nd ou un barreau de verre dopé (par exemple au Néodyme) et taillé de manière à réaliser un guide optique de section carrée.

De préférence, dans l'application du procédé à l'amplification de rayonnement laser, on produit le faisceau fragmenté à partir du faisceau laser auquel on a fait traverser un dispositif interférentiel et de façon plus particulière, on réalise dans le dispositif interférentiel par bi-réfringence une division d'amplitude du faisceau laser pour former quatre ondes dont la valeur moyenne du produit de corrélation est nulle.

Selon un autre mode de réalisation, dans l'application du procédé à l'amplification de rayonnement laser, on produit une fragmentation du faisceau de structure géométrique régulière à l'aide d'un système à dispersion croisée produisant une image à travers un système afocal.

Dans tous les cas d'application à l'amplification laser, la présente invention permet de supprimer l'autofocalisation destructrice dans le barreau amplificateur d'une chaîne laser de puissance.

La présente invention concerne également de façon plus particulière un procédé de modulation de phase optique dans un faisceau lumineux pulsé cohérent de profil spatial donné, caractérisé en ce que ledit faisceau lumineux pulsé à profil spatial donné est divisé en quatre faisceaux secondaires identiques qui sont dirigés vers ledit matériau à variation auto-induite d'indice de réfraction, en ce que l'on agit sur le trajet de chaque faisceau secondaire de telle sorte que les faisceaux secondaires arrivent dans ledit matériau selon différentes directions mais de manière à se superposer dans ledit matériau, en ce que l'on agit sur le trajet de chaque faisceau secondaire de telle manière que les différents trajets présentent la même longueur et que les différents faisceaux secondaires se superposent de manière à définir une structure divisée en cellules régulières par la modulation de franges d'interférences bidimensionnelles, et en ce que l'on agit sur les angles entre les directions des différents faisceaux secondaires de telle sorte que chaque cellule de ladite structure créée par interférences transporte une puissance inférieure à une valeur de puissance critique donnée associée audit matériau, telle que le faisceau lumineux est normalement amené à exploser en sortie du matériau chaque fois que sa puissance dépasse ladite valeur de puissance critique, de telle sorte que la puissance totale du rayonnement des faisceaux secondaires dirigés sur ledit matériau peut excéder ladite valeur de puissance critique et induire une modulation de phase temporelle de plus de $2\pi$ radians sans affecter le profil spatial donné du faisceau lumineux d'entrée.

D'autres caractéristiques et avantages de l'invention ressortiront de la description qui fait suite de modes particuliers de réalisation de l'invention, en référence au dessin annexé, sur lequel:

la figure 1 est une vue schématique de dessus d'un premier dispositif d'interférométrie à quatre ondes utilisable dans le dispositif selon l'invention,

la figure 2 est une vue schématique de côté du dispositif de la figure 1,

la figure 3 est une vue en coupe selon la ligne III-III des figures 1 et 2,

la figure 4 est une vue schématique de dessus d'un second dispositif d'interférométrie à quatre ondes utilisable dans le dispositif selon l'invention,

la figure 5 est une vue schématique de côté du dispositif de la figure 4,

la figure 6 est une vue en coupe selon la ligne VI-VI des figures 4 et 5,

la figure 7 représente une vue schématique en perspective d'un dispositif de filtrage de fréquences spatiales,

la figure 8 est une vue en perspective d'un réseau de diffraction double pouvant être substitué au masque du dispositif de filtrage de la figure 7, et

les figures 8a et 8b représentent le réseau double de la figure 8 vu de face et de côté respectivement.

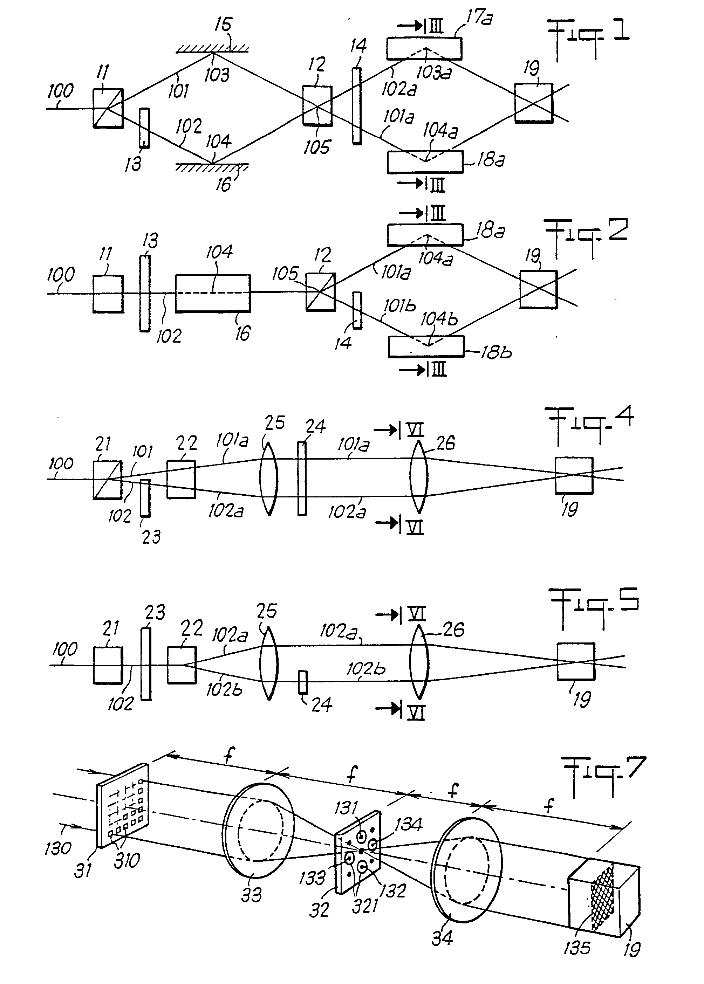

On voit sur les figures 1 à 3 un dispositif d'interférométrie à quatre ondes qui reçoit d'une source laser, non représentée, de préférence du type source laser à modes bloqués, une onde principale 100 de lumière cohérente. Le faisceau principal 100 est appliqué à un premier prisme de Wollaston 11 à grand angle de déviation constituant un polariseur à double faisceau qui dédouble l'onde incidente 100 pour former deux ondes secondaires divergentes 101, 102 de lumière polarisée présentant des amplitudes réduites par rapport à l'onde principale 100. Une lame demi-onde 13 est disposée sur le trajet de l'une des deux ondes secondaires 101, 102, par exemple l'onde secondaire 102, pour rendre parallèles les polarisations orthogonales créées par le prisme de Wollaston 11.

Les ondes secondaires 101, 102 divergentes sont ensuite réfléchies aux points 103, 104 par des miroirs plans 15, 16 respectivement, qui sont parallèles l'un à l'autre, se font face et dans la mesure où ils sont disposés perpendiculairement au plan $P_1$ défini par les ondes secondaires 101, 102 et sont symétriques par rapport à l'onde principale 100, assurent une focalisation des ondes secondaires 101, 102 en un point 105 où se trouve placé un second prisme de Wollaston 12 à grand angle de déviation, disposé perpendiculairement au premier prisme de Wollaston 11, pour dédoubler chacune des ondes secondaires 101, 102 en deux ondes tertiaires 101a, 101b, 102a, 102b respectivement dans des plans perpendiculaires au plan $P_1$ de la figure 1. Une seconde lame demi-onde 14 est disposée sur les trajets des ondes tertiaires 101b, 102b tandis que les ondes tertiaires 101a, 102a poursuivent librement leur chemin. La seconde lame demi-onde 14, d'une manière analogue à la première lame demi-onde 13, est destinée à ramener en parallélisme dans un même plan les polarisations orthogonales créées par le second prisme de Wollaston 12 dans chacun des plans définis par les rayons 101a, 101b d'une part et 102a, 102b d'autre part. Les ondes tertiaires 101a, 101b, 102a, 102b qui divergent à partir du second prisme de Wollaston 12 sont ensuite réfléchies en des points 103a, 103b, 104a, 104b sur des miroirs plans 17a, 17b, 18a, 18b disposés selon les côtés d'un carré et inclinés de 45 par rapport aux plans des miroirs 15, 16. Les ondes tertiaires réfléchies 101a, 101b, 102a, 102b convergent alors dans un matériau optique non linéair 19, par exemple du sulfure de carbone, pour créer des franges d'interférences qui conduisent à la formation de déphasages stables en sortie du matériau non linéaire 19.

A titre d'exemple, la distance entre les premier et second prismes de Wollaston 11, 12 peut être de l'ordre de 50cm tandis que la distance entre le second prisme de Wollaston 12 et le matériau non linéaire 19 peut être de l'ordre de 1 mètre.

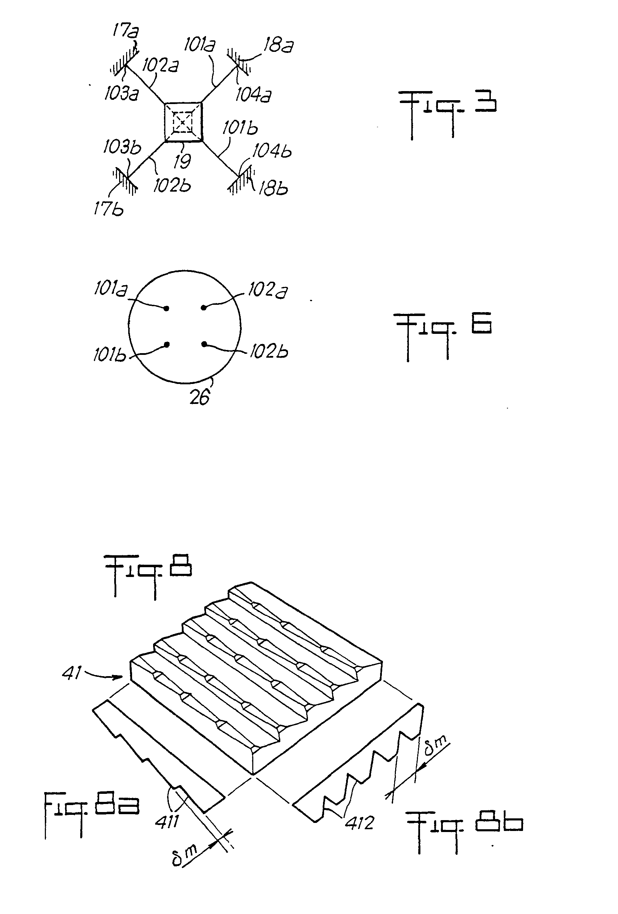

Les figures 4 à 6 montrent un dispositif d'interférométrie à quatre ondes qui ressemble en partie à celui des figures 1 à 3, mais met en oeuvre des premier et second prismes de Wollaston 21, 22 qui sont à petit angle de déviation. Le second prisme de Wollaston 22 peut ainsi être placé immédiatement à la suite de la première lame demi-onde 23 disposée après le premier prisme de Wollaston 21 sur le trajet de l'une 102 des deux ondes secondaires polarisées 101, 102 créées par dédoublement de l'onde principale 100 dans le premier prisme de Wollaston 21. Le second prisme de Wollaston 22 est ainsi placé sur une partie faiblement divergente des ondes secondaires 101, 102 pour dédoubler les ondes secondaires 101, 102 dans des plans perpendiculaires au plan de la figure 4 et former quatre ondes tertiaires divergentes 101a, 101b, 102a, 102b. Un système afocal composé de deux lentilles convergentes 25, 26 permet d'obtenir des faisceaux parallèles entre les deux lentilles 25, 26 et de faire converger les quatre ondes tertiaires 101a, 101b, 102a, 102b dans le matériau non linéaire 19 disposé en aval de la seconde lentille 26. Une seconde lame demi-onde 24 est en outre interposée sur le trajet des ondes tertiaires 101b, 102b, derrière la lentille 25 pour ramener en parallélisme le sens des polarisations des diverses ondes tertiaires. Le système afocal réducteur 25, 26 permet de reporter dans le matériau non linéaire 19 les interférences verticales formées à partir des quatre ondes tertiaires. Le système afocal est conçu de manière à ne pas créer de point de focalisation réel dans l'air afin d'éviter que se produise une ionisation de l'air, compte tenu des puissances mises en jeu (de l'ordre du Gigawatt). On notera que le dispositif des figures 1 à 3, du fait de l'utilisation de miroirs 17a, 17b, 18a, 18b, évite lui aussi la création de points de focalisation dans l'air entre le second prisme de Wollaston 12 et le matériau non linéaire 19. L'encombrement d'un dispositif à miroirs est cependant un peu plus grand que celui d'un système afocal à lentilles.

Le dispositif de la figure 7 représente un autre mode de réalisation d'une onde fragmentée en cellules régulières. A la place des systèmes interférométriques des figures 1 à 6, on utilise un masque 31 percé d'ouvertures 310 de forme carrée disposées régulièrement en damier, pour former une grille, lequel masque est placé sur le trajet du faisceau principal 130 émis par une source laser, non représentée. Le masque 31 est placé dans le plan focal objet d'une première lentille convergente 33 dont le plan focal image contient un filtre 32 muni de quatre cuvertures 321 réparties en croix pour ne laisser passer que quatre taches lumineuses 131, 132, 133, 134 parmi la multiplicité de taches créées à partir de la grille 31. Une seconde lentille convergente 34 dont le plan focal objet contient le filtre 32 et dont le plan focal image est situé au niveau du matériau non linéaire 19 permet la formation, au sein du matériau non linéaire 19, d'une image du pavage lumineux bidimensionnel du masque 31, avec la présence de franges qui correspond à la production de déphasages stables en sortie du matériau non linéaire 19.

On notera que sur la figure 7 on a représenté des lentilles 33, 34 ayant la même distance focale. Ceci n'est cependant pas indispensable et des lentilles de distances focales différentes pourraient également être utilisées.

Le montage de la figure 7 introduit une certaine perte d'énergie au niveau du filtre 32 mais présente l'avantage de créer de façon très simple une onde fragmentée en cellules régulières.

A titre de variante du montage de la figure 7, et pour supprimer la nécessité d'utiliser le filtre 32, la grille de masquage 31 peut être remplacée par un système à dispersion croisée constitué par un réseau de diffraction 41 à deux dimensions, travaillant par réflexion ou transparence, et pouvant être par exemple du type de celui raprésenté sur les figures 8, 8a et 8b. Le réseau 41 à double gravure peut ainsi comporter une première série de sillons 411 présentant une première profondeur de gravure et un premier pas et une seconde série de sillons 412 présentant une seconde profondeur de gravure et un second pas.

Les différents dispositifs décrits ci-dessus permettent d'obtenir en sortie du matériau non linéaire 19 des déphasages supérieurs à 2′ radians tout en conservant un faisceau lumineux stable évoluant de façon maîtrisée. Cela est dû au fait que, contrairement aux dispositifs connus dans lesquels une onde plane de type gaussien est appliquée directement au matériau non linéaire (c'est-à-dire à variation auto-induite d'indice de réfraction), selon l'invention, on applique au matériau non linéaire, un ensemble d'ondes fragmentées en cellules régulières formées par division d'amplitude dans un milieu biréfringent, ou obtenues par filtrage spatial.

La maîtrise de la phase d'un faisceau lumineux permet des applications nombreuses et variées et autorise notamment la commande des caractéristiques d'un composant optique dépendant du temps à partir d'un faisceau lumineux externe, ou la commande sans perte en temps réel d'un faisceau lumineux par un autre, avec des temps de réaction de l'ordre de la picoseconde.

Selon une application importante, les dispositifs d'interférométrie des figures 1 à 6 peuvent être disposés sur le trajet d'un faisceau laser en vue de permettre une amplification laser de très haute puissance. Dans ce cas, le matériau 19 est constitué par un matériau amplificateur qui, lorsque l'intensité du rayonnement laser est importante, se comporte comme un matériau présentant une non linéarité non négligeable.

Par la fragmentation du faisceau icident qui est réalisée au sein du dispositif interférométrique, il est possible d'augmenter la puissance que peut transporter l'onde sans problème critique d'auto-focalisation dans le matériau amplificateur. Par suite, pour une dimension donnée de barreau amplificateur, la puissance qu'il est possible d'atteindre pour le faisceau amplifié est largement supérieure à celle qui serait obtenue en l'absence d'un dispositif d'interférométrie assurant une fragmentation de l'onde incidente en cellules régulières' Ainsi, contrairement aux dispositifs d'amplification laser de l'art antérieur qui, pour permettre une augmentation du gain doivent comprendre un barreau en forme de disque de faible longueur et grande largeur afin de diminuer la densité de puissance et éviter l'auto-focalisation, un dispositif d'amplification selon l'invention peut comprendre un barreau amplificateur de grande longueur et faible section.

De façon plus particulière, dans un dispositif d'amplification laser de très haute puissance selon l'invention, on améliore la stabilité de la propagation des ondes dans le barreau amplificateur en choisissant l'épaisseur du barreau amplificateur en fonction de la largeur des franges d'interférence. On forme ainsi une distribution d'intensité correspondant à un mode propre de propagation du guide optique constitué par le milieu amplificateur, et on évite que des franges soient présentes sur les bords du barreau.

Le barreau amplificateur est taillé de manière à réaliser un guide optique pour augmenter la longueur d'interaction du faisceau avec le milieu amplificateur. Les faisceaux fragmentés sont ainsi confinés dans le milieu amplificateur et sont restitués à la sortie de ce milieu amplificateur après une intaraction lumière-matière effectuée sur une grande longueur et sans qu'il y ait eu auto-focalisation.

Il est naturellement possible de réaliser une chaîne d'amplification en disposant plusieurs barreaux amplificateurs montés en cascade les uns à la suite des autres.

Afin de ne pas trop affaiblir le faisceau laser de départ, lorsque l'on souhaite réaliser une amplification du faisceau laser, il est préférable d'interposer entre la source laser et le milieu amplificateur 19 un dispositif d'interférométrie tel que celui représenté sur les figures 1 et 2 ou celui représenté sur les figures 3 et 4. Le dispositif de modulation spatiale périodique représenté sur la figure 7 est lui-même un peu moins bien adapté à cette application dans la mesure où il implique deux filtrages de fréquences spatiales et absorbe ainsi plus d'énergie.

**Revendications**

1. Procédé de modulation de phase optique dans un faisceau lumineux pulsé cohérent de structure géométrique régulière, dans lequel ledit faisceau traverse un matériau à variation auto-induite d'indice de réfraction, caractérisé en ce que ledit faisceau est fragmenté de manière à former une structure bidimensionnelle divisée en cellules régulières lors de sa propagation dans ledit matériau.

2. Procédé selon la revendication 1, caractérisé en ce que l'on produit le faisceau fragmenté à partir d'un faisceau laser auquel on a fait traverser un dispositif interférentiel ou de modulation spatiale périodique.

3. Procédé selon la revendication 2, caractérisé en ce que l'on utilise un faisceau laser délivré par une source laser à modes bloqués afin d'obtenir des déphasages dépendant de l'espace et du temps suivant une loi prédéterminée.

4. Procédé selon la revendication 2, caractérisé en ce que l'on réalise dans le dispositif interférentiel par bi-fréquence une division d'amplitude du faisceau laser pour former quatre ondes dont la valeur moyenne du produit de corrélation est nulle.

5. Procédé selon la revendication 1, caractérisé en ce que l'on produit une fragmentation du faisceau de structure géométrique régulière par filtrage des fréquences spatiales au moyen d'une double diffraction.

6. Procédé selon la revendication 1, caractérisé en ce que l'on produit une fragmentation du faisceau de structure géométrique régulière à l'aide d'un système à dispersion croisée produisant une image à travers un système afocal.

7. Procédé selon l'une quelconque des revendications 1 à 6, caractérisé en ce que le matériau à variation auto-induite d'indice de réfraction est suffisamment non linéaire pour permettre l'obtention de déphasages optiques supérieurs à $2\pi$ radians.

8. Procédé selon l'une quelconque des revendications 1 à 7, caractérisé en ce que le matériau à variation auto-induite d'indice de réfraction est du sulfure de carbone ($CS_2$).

9. Procédé selon la revendication 1, caractérisé en ce que le matériau à variation auto-induite d'indice de réfraction est constitué par un matériau amplificateur, de sorte que des gains élevés dans des faisceaux de structure géométrique régulière sont obtenus.

10. Procédé selon la revendication 9, caractérisé en ce que le faisceau fragmenté réalise la distribution transversale d'intensité d'un mode propre de propagation du guide optique constitué par le matériau amplificateur.

11. Procédé selon la revendication 10, caractérisé en ce que le matériau amplificateur est un cristal YAG; Nd ou un barreau de verre dopé et taillé de manière à réaliser un guide optique de section carrée.

12. Procédé selon l'une quelconque des revendications 9 à 11, caractérisé en ce que l'on produit le faisceau fragmenté à partir du faisceau laser à amplifier auquel on a fait traverser un dispositif interférentiel et en ce que l'on réalise dans le dispositif interférentiel par bi-réfringence une division d'amplitude du faisceau laser pour former quatre ondes dont la valeur moyenne du produit de corrélation est nulle.

13. Procédé selon l'une quelconque des revendications 9 à 11, caractérisé en ce que l'on produit une fragmentation du faisceau de structure géométrique régulière à l'aide d'un système à dispersion croisée produisant une image à travers un système afocal.

14. Dispositif de modulation de phase optique contrôlable stable, comprenant une source d'impulsions laser brèves et un matériau à variation auto-induite d'indice de réfraction, caractérisé en ce qu'il comprend un dispositif d'interférométrie ou de masquage qui est interposé entre la source d'impulsions laser brèves et le matériau (19) à variation auto-induite d'indice de réfraction pour former quatre ondes fragmentées dont la valeur moyenne du produit de corrélation est nulle.

15. Dispositif de modulation selon la revendication 14, caractérisé en ce que le matériau à variation auto-induite d'indice de réfraction est constitué par un matériau amplificateur (19), de sorte que des gains élevés dans le faisceau laser sont obtenus.

16. Dispositif de modulation selon la revendication 15, caractérisé en ce que le matériau amplificateur est taillé de manière à réaliser un guide optique et en ce qu'en outre un dispositif d'interférométrie est interposé entre la source laser et le milieu amplificateur, pour former une distribution d'intensité correspondant à un mode propre de propagation du guide optique constitué par le milieu amplificateur.

17. Dispositif selon l'une quelconque des revendications 14 à 16, caractérisé en ce que le dispositif d'interférométrie comprend un premier prisme de Wollaston (11) à grand angle de déviation interposé sur le trajet du faisceau laser principal (100) émis par la source laser, pour réaliser un premier dédoublement du faisceau laser principal (100) en deux faisceaux secondaires divergents (101, 102) situés dans un premier plan $P_1$, une lame demi-onde (13) disposée sur le trajet de l'un des deux faisceaux secondaires (101, 102), des premier et second miroirs (15, 16) disposés sur les trajets des deux faisceaux secondaires (101, 102), perpendiculairement audit premier plan $P_1$ pour rendre convergents les deux faisceaux secondaires divergents (101, 102), un second prisme de Wollaston (12) à grand angle de déviation placé au point de convergence (105) des deux faisceaux secondaires (101, 102) pour réaliser un dédoublement de chacun des deux faisceaux secondaires (101, 102) dans des plans perpendiculaires audit premier plan $P_1$ de manière à créer un ensemble de quatre faisceaux tertiaires divergents (101a, 101b, 102a, 102b), une seconde lame demi-onde (14) disposée sur le trajet de deux (101b, 102b) des quatre faisceaux tertiaires divergents (101a, 101b, 102a, 102b) et des troisième, quatrième, cinquième et sixième miroirs (17a, 17b, 18a, 18b) placés sur les trajets des quatre faisceaux tertiaires divergents (101a, 101b, 102a, 102b) et inclinés par rapport aux premier et second miroirs (15, 16) de manière à faire converger les quatre faisceaux tertiaires (101a, 101b, 102a, 102b) dans le matériau (19) à variation auto-induite d'indice de réfraction.

18. Dispositif selon l'une quelconque des revendications 14 à 16, caractérisé en ce que le dispositif d'interférométrie comprend un premier prisme de Wollaston (21) à petit angle de déviation interposé sur le trajet du faisceau laser principal (100) émis par la source laser, pour réaliser un premier dédoublement du faisceau laser principal (100) en deux faisceaux secondaires faiblement divergents (101, 102) situés dans un premier plan $P_1$, une lame demi-onde (23) disposée sur le trajet de l'un des deux faisceaux secondaires (101, 102), un second prisme de Wollaston (23) à petit angle de déviation placé sur le trajet des deux faisceaux secondaires (101, 102) pour réaliser un dédoublement de chacun des deux faisceaux secondaires (101, 102) dans des plans perpendiculaires audit premier plan $P_1$ de manière à créer un ensemble de quatre faisceaux tertiaires faiblement divergents (101a, 101b, 102a, 102b), une seconde lame demi-onde (24) disposée sur le trajet de deux (101b, 102b) des quatre faisceaux tertiaires (101a, 101b, 102a, 102b) et un système optique afocal (25, 26) placé sur les trajets des quatre faisceaux tertiaires faiblement divergents (101a, 101b, 102a, 102b) pour faire converger les quatre faisceaux tertiaires (101a, 101b, 102a, 102b) dans le matériau (19) à variation auto-induite d'indice de réfraction.

19. Dispositif selon la revendication 14, caractérisé en ce qu'il comprend un dispositif de masquage à quatre faisceaux constitué successivement par un masque binaire (31) comprenant un réseau d'ouvertures (310) réparties en damier, une première lentille convergente (33), un filtre spatial (32) muni d'un ensemble de quatre ouvertures (321) réparties en croix, et une seconde lentille convergente (34) pour former un réseau de franges dans le matériau (19) à variation auto-induite d'indice de réfraction.

20. Dispositif selon la revendication 19, caractérisé en ce que le masque binaire (31) et le filtre (32) sont situés dans les plans focaux de la première lentille convergente (33), tandis que le filtre (32) et le matériau (19) à variation auto-induite d'indice de réfraction sont situés dans les plans focaux de la seconde lentille convergente (34).

21. Dispositif selon l'une quelconque des revendications 14 à 16, caractérisé en ce qu'il comprend un dispositif de masquage à quatre faisceaux constitué par un réseau de diffraction à deux dimensions par réflexion ou transparence et un système optique afocal pour former un réseau de franges dans le matériau (19) à variation auto-induite d'indice de réfraction.

22. Procédé de modulation de phase optique dans un faisceau lumineux pulsé cohérent de profil spatial donné, selon la revendication 1, caractérisé en ce que ledit faisceau lumineux pulsé à profil spatial donné est divisé en quatre faisceaux secondaires identiques qui sont dirigés vers ledit matériau à variation auto-induite d'indice de réfraction, en ce que l'on agit sur le trajet de chaque faisceau secondaire de telle sorte que les faisceaux secondaires arrivent dans ledit matériau selon différentes directions mais de manière à se superposer dans ledit matériau, en ce que l'on agit sur le trajet de chaque faisceau secondaire de telle manière que les différents trajets présentent la même longueur et que les différents faisceaux secondaires se superposent de manière à définir une structure divisée en cellules régulières par la modulation de franges d'interférences bidimensionnelles, et en ce que l'on agit sur les angles entre les directions des différents faisceaux secondaires de telle sorte que chaque cellule de ladite structure créée par interférences transporte une puissance inférieure à une valeur de puissance critique donnée associée audit matériau, telle que le faisceau lumineux est normalement amené à exploser en sortie du matériau chaque fois que sa puissance dépasse ladite valeur de puissance critique, de telle sorte que la puissance totale du rayonnement des faisceaux secondaires dirigés sur ledit matériau peut excéder ladite valeur de puissance critique et induire une modulation de phase temporelle de plus de $2\pi$ radians sans affecter le profil spatial donné du faisceau lumineux d'entrée.

**Patentansprüche**

1. Verfahren zur optischen Phasenmodulation in einem kohärenten gepulsten Lichtstrahl mit regelmäßiger geometrischer Struktur, wobei der Strahl ein Material mit autoinduzierter Variation des Brechungsindex durchquert, dadurch gekennzeichnet, daß der Strahl so aufgeteilt wird, daß er eine zweidimensionale Struktur bildet, die während seines Durchgangs durch das Material in regelmäßige Zellen geteilt ist.

2. Verfahren nach Anspruch 1, dadurch gekennzeichnet, daß man den geteilten Strahl ausgehend von einem Laserstrahl erhält, den man durch eine Interferenzvorrichtung oder eine Vorrichtung zur periodischen räumlichen Modulation lenkt.

3. Verfahren nach Anspruch 2, dadurch gekennzeichnet, daß man einen Laserstrahl verwendet, der von einer Laserquelle mit fester Modulation stammt, um nach einem vorbestimmten Gesetz im Raum und in der Zeit Phasenverschiebungen zu erhalten.

4. Verfahren nach Anspruch 2, dadurch gekennzeichnet, daß in der Interferenzvorrichtung durch Frequenzverdopplung eine Teilung der Amplitude des Laserstrahles bewirkt wird, um vier Wellen zu schaffen, deren mittleres Korrelationsprodukt Null ist.

5. Verfahren nach Anspruch 1, dadurch gekennzeichnet, daß man eine Teilung des Strahls mit regelmäßiger geometrischer Struktur durch räumliches Frequenzfiltern mittels doppelter Difraktion erhält.

6. Verfahren nach Anspruch 1, dadurch gekennzeichnet, daß man eine Teilung des Strahles mit regelmäßier geometrischer Struktur mit Hilfe eines gekreuzten Dispersionssystems erhält, das durch ein afokales System ein Bild produziert.

7. Verfahren nach einem der Ansprüche 1 bis 6, dadurch gekennzeichnet, daß das Material mit selbstinduzierter Brechungsindexvariation genügend nichtlinear ist, um optische phasenverschiebungen von über $2\pi$ Radian erhalten zu können.

8. Verfahren nach einem der Ansprüche 1 bis 7, dadurch gekennzeichnet, daß das Material mit autoinduzierter Brechungsindexvariation Schwefelkohlenstoff ist ($CS_2$).

9. Verfahren nach Anspruch 1, dadurch gekennzeichnet, daß das Material mit autoinduzierter Brechungsindexvariation aus einem verstärkenden Material besteht, von der Art, daß in den Strahlen mit regelmäßiger geometrischer Struktur erhöhte Ausbeuten erhalten werden.

10. Verfahren nach Anspruch 9, dadurch gekennzeichnet, daß der geteilte Strahl eine Intensitätsquerverteilung aufweist, die mit dem Ausbreitungseigenwert des optischen Leiters, der aus dem Verstärkermaterial gebildet wird, übereinstimmt.

11. Verfahren nach Anspruch 10, dadurch gekennzeichnet, daß das Verstärkermaterial ein YAG-Kristall, Nd oder ein Glasstab ist, der so dotiert und geformt ist, daß er einen optischen Leiter mit quadratischem Querschnitt darstellt.

12. Verfahren nach einem der Ansprüche 9 bis 11, dadurch gekennzeichnet, daß man den geteilten Strahl ausgehend von einem zu verstärkenden Laserstrahl erhält, den man durch eine Interferenzvorrichtung gelenkt hat, wobei man in der Interfezvorrichtung durch Birefringenz eine Amplitudenteilung des Laserstrahls bewirkt, um vier Wellen zu formen, deren mittleres Korrelationsprodukt Null ist.

13. Vefahren nach einem der Ansprüche 1 bis 11, dadurch gekennzeichnet, daß die Teilung des Strahles mit regelmäßiger geometrischer Struktur mit Hilfe eines gekreuzten Dispersionssystems erfolgt, das durch ein afokales System ein Bild produziert.

14. Vorrichtung zur stabilen regelbaren optischen Phasenmodulation, umfassend eine Laserimpulsquelle und ein Material mit autoinduzierter Brechungsindexvariation, dadurch gekennzeichnet daß sie eine Interferenzvorrichtung oder Maske aufweist, die zwischen der Laserimpulsquelle und dem Material (19) mit autoinduzierter Brechungsindexvariation angeordnet ist, um vier Teilwellen zu bilden, deren mittleres Korrelationsprodukt Null ist.

15. Modulationsvorrichtung nach Anspruch 14, dadurch gekennzeichnet, daß das Material mit autoinduzierter Brechungsindexvariation aus einem Verstärkermaterial (19) besteht, so daß im Laserstrahl erhöhte Ausbeuten erhalten werden.

16. Modulationsvorrichtung nach Anspruch 15, dadurch gekennzeichnet, daß das Verstärkermaterial so ausgebildet ist, daß es einen optischen Leiter bildet und daß weiters eine Interferenzvorrichtung zwischen der Laserquelle und dem Verstärkerbereich angeordnet ist, um eine Intensitätsverteilung zu schaffen, die einem Eigenwert des Ausbreitungsmodus des optischen Leiters, der aus dem Verstärkermaterial besteht, entspricht.

17. Vorrichtung nach einem der Ansprüche 14 bis 16, dadurch gekennzeichnet, daß die Interferenzvorrichtung ein erstes Wollaston-Prisma (11) mit großem Ablenkwinkel das im Laserhauptstrahl (100), der von der Laserquelle emittiert wird, angeordnet ist, um eine erste Verdopplung des Laserhauptstrahls (100) in zwei divergente Sekundärstrahlen (101, 102), die in einer ersten Ebene $P_1$ liegen, zu schaffen, ein Polarisationsdrehplättchen (13), das in der Bahn eines der beiden Sekundärstrahlen (101, 102) angeordnet ist, erste und zweite Spiegel (15, 16), die in den Bahnen der beiden Sekundärstrahlen (101, 102) rechtwinkelig auf die erste Ebene $P_1$ angeordnet sind, um die beiden divergenten Sekundärstrahlen (101, 102) aufeinander zu lenken und ein zweites Wollaston-Prisma (12) mit großem Ablenkwinkel, das im Treffpunkt (105) der beiden Sekundärstrahlen (101, 102) vorgesehen ist, um eine Verdopplung eines jeden der beiden Sekundärstrahlen (101, 102) in Ebenen rechtwinkelig auf die erste Ebene $P_1$ zu bewirken, um ein Ensemble von vier auseinander laufenden Tertiärstrahlenstrahlen (101a, 101b, 102a, 102b) zu schaffen, ein zweites Polarisationsdrehplättchen (14), das in der Bahn von zwei (101b, 102b) der vier auseinanderstrebenden Tertiärstrahlen (101a, 101b, 102a, 102b) angeordnet ist und dritte, vierte, fünfte und sechste Spiegel (17a, 17b, 18a, 18b), die in den Bahnen der vier auseinanderlaufenden Tertiärstrahlen (101a, 101b, 102a, 102b) angeordnet und bezüglich der ersten und zweiten Spiegel (15, 16) so geneigt sind, daß sie die vier Tertiärstrahlen (101a, 101b, 102a, 102b) in das Material (19) mit autoinduzierter Brechungsindexvariation leiten, aufweist.

18. Vorrichtung nach einem der Ansprüche 14 bis 16, dadurch gekennzeichnet, daß die Interferenzvorrichtung ein erstes Wollaston-Prisma (21) mit kleinem Ablenkwinkel aufweist, das zwischen dem Laserhauptstrahl (100), der von der Laserquelle emittiert wird, angeordnet ist, um eine erste Verdopplung des Laserhauptstrahs (100) in zwei leicht divergierende Sekundärstrahlen (101, 102) in einer ersten Ebene P₁ zu bewirken, mit einem Polarisationsdrehplättchen (23), das in der Bahn eines der beiden Sekundärstrahlen (101, 102) vorgesehen ist, einem zweiten Wollaston-Prisma (23) mit kleim Ablenkwinkel, das in der Bahn der beiden Sekundärstrahlen (101, 102) angeordnet ist, um eine Verdopplung jedes der beiden Sekundärstrahlen in Ebenen rechtwinkelig auf die erste Ebene P₁ zu bewirken, um so ein Ensemble von vier leicht divergenten Tertiärstrahlen (101a, 101b, 102a, 102b) zu schaffen mit einem zweiten Polarisationsdrehplättchen (24), das in der Bahn von zwei der vier Tertiärstrahlen angeordnet ist und einem afokalen optischen System (25, 26), das in den Bahnen der vier leicht divergenten Tertiärstrahlen angeordnet ist, um die vier Tertiärstrahlen (101a, 101b, 102a, 102b) im Material (19) mit autoinduzierter Brechungsindexvariation aufeinander treffen zu lassen.

19. Vorrichtung nach Anspruch 14, dadurch gekennzeichnet, daß sie eine Maskenvorrichtung für vier Strahlen aufweist, die der Reihe nach aus einer Binärmaske (31), umfassend eine Matrix von Öffnungen (310), die schachbrettartig verteilt sind, einer ersten Sammellinse (33), einem räumlichen Filter (32), das mit einem Ensemble von vier kreuzförmig angebrachten Öffnungen (321) versehen ist und einer zweiten Sammellinse (34), um ein Netz von Interferenzstreifen im Material (19) mit autoinduzierter Brechungsindexvariation zu bilden.

20. Vorrichtung nach Anspruch 19, dadurch gekennzeichnet, daß die Binärmaske (31) und das Filter (32) in den Brennebenen der ersten Sammellinse (33) angeordnet sind, während das Filter (32) und das Material (19) mit autoinduzierter Brechungsindexvariation in den Brennebenen der zweiten Sammellinse (34) angeordnet sind.

21. Vorrichtung nach einem der Ansprüche 14 bis 16, dadurch gekennzeichnet, daß sie eine Maskenvorrichtung mit vier Strahlen aufweist, die aus einem zweidimensionalen Difraktionsnetz, geschaffen durch Reflexion oder Transparenz besteht und einem afokalen optischen System, um ein Netz von Interferenzstreifen im Material (19) mit autoinduzierter Brechungsindexvariarion zu bilden.

22. Verfahren zur optischen Phasenmodulation eines gepulsten koherenten Lichtstrahls mit gegebenem räumlichen Profil nach Anspruch 1, dadurch gekennzeichnet, daß der gepulste Lichtstrahl mit gegebenem räumlichen Profil in vier identische Sekundärstrahlen geteilt wird, die durch das Material mit autoinduzierter Brechungsindexvariation geleitet werden und dadurch, daß man auf die Bahn jedes Sekundärstrahls so einwirkt, daß die Sekundärstrahlen in dem Material von verschiedenen Richtungen, aber auf eine solche Weise eintreffen, daß sie sich im Material überlagern, und daß man auf die Bahn jedes Sekundärstrahls so einwirkt, daß die verschiedenen Bahnen die gleiche Länge aufweisen, und daß sich die verschiedenen Sekundärstrahlen so überlagern, daß sie eine in regelmäßige Zellen geteilte Struktur durch die Modulation zweidimensionaler Interferenzmuster definieren und dadurch, daß man auf die Winkel zwischen den Richtungen der unterschiedlichen Sekundärstrahlen so einwirkt, daß jede Zelle der durch Interferenz gebildeten Struktur eine Leistung transportiert, die kleiner ist als ein kritischer Leistungswert, der dem Material zu eigen ist, bei dem der Lichstrahl normalerweise beim Verlassen des Materials explodiert, sobald seine Leistung den genannten kritischen Leistungswert überschreitet, wobei die Gesamtleistung der auf das Material gerichteten Sekundärstrahlen die kritische Leistung übersteigen kann und eine zeitliche Phasenmodulation größer als 2 π Radian eingebracht wird, ohne das räumliche Profil des Eingangslichtstrahles zu beeinträchtigen.

## Claims

1. Method of optical phase modulation on a coherent pulsed light beam of regular geometrical structure, in which said beam is fragmented so as to form a two-dimensional structure divided into regular cells during its propagation into said material.

2. Method according to claim 1, characterized in that the fragmented beam is made from a laser beam which is caused to pass through an interference device or a device for periodic space modulation.

3. Method according to claim 2, characterized in that the laser beam used is delivered by a locked mode laser source, in order to obtain phase shifts which vary as a function of space and of time in accordance with a predetermined law.

4. Method according to claim 2, characterized in that the interference device makes use of birefringence to divide the amplitude of the laser beam to form four waves for which the average value of the correlation product is zero.

5. Method according to claim 1, characterized in that a beam of regular geometrical structure is fragmented by space frequency filtering using a double diffraction.

6. Method according to claim 1, characterized in that a beam of regular geometrical structure is fragmented by means of a crossed dispersion system producing an image via an afocal system.

7. Method according to any one of claims 1 to 6, characterized in that the material having self-induced variation of refractive index is sufficiently non-linear to enable optical phase shifts of more than 2 π radians to be obtained.

8. Method according to any one of claims 1 to 7, characterized in that the material having self-induced variation in refractive index is carbon disulfide ($CS_2$).

9. Method according to claim 1, characterized in that the material having self-induced variation in refractive index is constituted by an amplifying material, so that high gains in beams of regular geometrical structure are obtained.

10. Method according to claim 9, characterized in that the fragmented wave provides the transverse intensity distribution of a propagation mode of the light guide constituted by the amplifying material.

11. Method according to claim 10, characterized in that the amplifying material is a YAG;Nd crystal or a bar of doped glass, and is cut in such a manner as to constitute a light guide of square section.

12. Method according to any one of claims 9 to 11, characterized in that the fragmented beam is produced from the laser beam to be amplified by passing the laser beam through an interference. device, and wherein the interference device uses bi-refringence to divide the amplitude of the laser beam into four waves for which the average value of the correlation product is zero.

13. Method according to any one of claims 9 to 11, characterized in that a beam of regular geometrical structure is fragmented by means of a crossed dispersion system producing an image through an afocal system.

14. Device for producing stable and controllable optical phase moouiation, comprising a source of short laser pulses and a material having self-induced variation in refractive index, characterized in that it comprises an interferometer or masking device, which is interposed between the source of short laser pulses and the material (19) having self-induced variation of refractive index in order to form four fragmented waves for which the average value of the correlation product is zero.

15. Modulation device according to claim 14, characterized in that the material having self-induced variation in refractive index is comprised of an amplifying material, so that high gains are obtained in beams of regular geometrical structure.

16. Modulation device according to claim 15, characterized in that the amplifier material is cut in such a way as to constitute a light guide and in that it further comprises an interferometer device which is interposed between the laser source and the amplifying medium in order to form an intensity distribution which corresponds to a propagation mode in the light guide constituted by the amplifying medium.

17. Device according to any one of claims 14 to 16, characterized in that the interferometer device comprises a first Wollaston prism (11) having a wide angle of deflection interposed on the path of the main pulsed wave (100) emitted from the laser source, to split the main pulsed wave a first time into two secondary and diverging waves (101, 102) which are situated in a first plane $P_1$, a halfwave plate (13) disposed on the path of one of the two secondary waves (101, 102), first and second mirrors (15, 16) disposed on the paths of the two secondary waves (101, 102), perpendicularly to said first plane $P_1$ to cause said divergent secondary waves (101, 102) to converge, a second Wollaston prism (12) having a large angle of deflection placed at the point of convergence (105) of the two secondary waves (101, 102) to split each of the two secondary waves (101, 102) in planes perpendicular to said first plane $P_1$, thereby creating a set of four diverging tertiary waves (101a, 101b, 102a, 102b), a second halfwave plate (14) disposed on the path of two (101b, 102b) of the four diverging tertiary waves (101a, 101b, 102a, 102b) and third, fourth, fifth and sixth mirrors (17a, 17b, 18a, 18b) placed on the paths of the four diverging tertiary waves (101a, 101b, 102a, 102b) at an angle relative to the first and second mirrors (15, 16) in such a manner as to cause the four tertiary waves (101a, 101b, 102a, 102b) to converge in the material (19) having self-induced variation of refractive index.

18. Device according to any one of claims 14 to 16, characterized in that the interferometer device comprises a first Wollaston prism (21) of small deflection angle interposed on the path of the main pulsed wave (100) emitted by the laser source, to split the main pulsed wave (100) a first time into two slightly diverging secondary waves (101, 102) situated in a first plane $P_1$, a halfwave plate (23) disposed on the path of one of the two secondary waves (101, 102), a second Wollaston prism (23) of small deflection angle placed on the path of the two secondary waves (101, 102) to split each of the two secondary waves (101, 102) in planes perpendicular to the first plane $P_1$ in such a manner as to create a set of four slightly divergent tertiary waves (101a, 101b, 102a, 102b), a second halfwave plate (24) disposed on the path of two (101b, 102b) of the four tertiary waves (101a, 101b, 102a, 102b), and an afocal optical system (25, 26) placed on the paths of the four slightly divergent tertiary waves (101a, 101b, 102a, 102b) in order to cause the four tertiary waves (101a, 101b, 102a, 102b) to converge in the material (19) having self-induced variation of refractive index.

19. Device according to claim 14, characterized in that it comprises a four wave masking device constituted by the following items in succession: a binary mask (31) comprising a grid of openings (310) disposed in a checkerboard pattern, a first converging lens (33), a space filter (32) provided with a set of four openings (321) disposed in a cross formation, and a second converging lens (34) for forming a network of fringes (19) in the material having self-induced variation of refractive index.

20. Device according to claim 19, characterized in that the binary mask (31) and the filter (32) are situated in the focal planes of the first converging lens (33), whereas the filter (32) and the material (19) having self-induced variation of refractive index are situated in the focal planes of the second converging lens (34).

21. Device according to any one of claims 14 to 16, characterized in that it comprises a four-wave masking device constituted by a two-dimensional diffraction grating operating by reflection or by transmission, and an afocal optical system for forming a network of fringes in the material (19) having self-induced variation of refractive index.

22. Optical phase modulation method carried out in a coherent pulsed light beam of given space profile, according to claim 1, characterized in that said pulsed light of given space profile is divided into four identical secondary waves which converge into said material exhibiting self-induced variation of refractive index, in that the path of each secondary wave is varied so that the secondary waves arrive in said material from different directions but such that they are superimposed in said material, in that the path of each secondary wave is varied so that the various paths have the same length, and in that the various secondary waves are superimposed so as to define a structure divided into regular cells by the modulation of two-dimensional interference fringes, and in that the angles between the directions of the various secondary waves are varied so that each cell of said structure created by interferences carries a power lower than a given critical power value associated to said material, such that the light beam is normally caused to explode when exiting from said material each time its power exceeds said critical power value, whereby the total power of radiation of the secondary waves converging on said material may exceed said critical power value and induce a temporal phase modulation of more than $2\pi$ radians without affecting the given spatial profile of the input light beam.

EP 0 180 509 B1

Fig. 1

Fig. 2

Fig. 4

Fig. 5

Fig. 7

Fig. 3

Fig. 6

Fig. 8

Fig. 8a

Fig. 8b